# EUROPEAN PATENT SPECIFICATION

(11) **EP 2 843 289 B1**
(45) Date of publication and mention of the grant of the patent: **10.11.2021**
(21) Application number: 14181287.5
(22) Date of filing: 18.08.2014
(51) Int. Cl.: F16N 3/12

(54) **GREASE GUN**
Fettpresse
Pistolet graisseur

(30) Priority: 27.08.2013 US 201361870413 P
(43) Date of publication of application: 04.03.2015
(73) Proprietor: Black & Decker Inc., Newark, Delaware 19711 (US)
(72) Inventor: Rudolph, Scott M, Aberdeen Maryland 21001 (US)
(74) Representative: SBD IPAdmin

(56) References cited:
- FR-A1- 2 687 758
- US-A- 2 928 574
- US-A1- 2004 231 927

## Description

The present invention pertains to a grease gun and in particular to a battery operated grease gun with improved product life.

A conventional hand operated grease gun is basically comprised of a housing containing a pump mechanism comprised of a plunger that reciprocates in a tubular pump chamber, a check valve and discharge spout that communicate with the pump chamber, a grease reservoir that communicate with the pump chamber tube and is adapted to have a tubular body containing grease or a grease reservoir attached thereto, and a manually manipulated pump lever or handle that is pivotally connected to the housing and is connected to the pump plunger to reciprocate the plunger in the pump chamber on manual pivoting movement of the lever. In manually operated grease guns of this type, the rate at which the lever is manually pivoted determines the rate at which grease is dispensed through the discharge spout. In addition, the manual force exerted on the lever multiplied by the length of the lever used as leverage determines the force or pressure of the grease dispensed from the gun through the discharge spout.

Electric grease guns, such as those powered with batteries, eliminate the need to manually pivot the grease gun lever. One such grease gun is disclosed in US Patent No. 6, 135,327.

Such grease gun has an electric motor that reciprocates the pump plunger to dispense grease under pressure from the grease gun. Many of the features of the manually operated grease gun are employed in the battery operated grease gun. Examples of battery operated grease guns and similar extruders are disclosed in the U.S. patents of Wegmann et al. U.S. Pat. No. 4,257,540, issued Mar. 24, 1981; Barry U.S. Pat. No. 5,404,967, issued Apr. 11, 1995; Shih et al. U.S. Pat. No. 5,609,274, issued Mar. 11, 1997; and Barry U.S. Pat. No. 5,685,462, issued Nov. 11, 1997.US2928574 discloses a grease gun having all of the features in the pre-characterizing portion of claim 1.

FR2687758 discloses a grease gun.

Accordingly, there is provided a grease gun in accordance with claim 1.
FIG. 1 is a side elevation view, in section, of a battery operated grease gun of the present invention;
FIG. 2 is a partial front elevation view of the yoke and plunger of the grease gun taken along the line 2--2 of FIG. 1;
FIG. 3 is a partial rear elevation view of the final driver taken along the line 3-3 of FIG. 1;
FIG. 4 is a partial cross-sectional side view of another embodiment of the grease gun; and
FIG. 5 is a cross-sectional view along line V-V of FIG. 4.

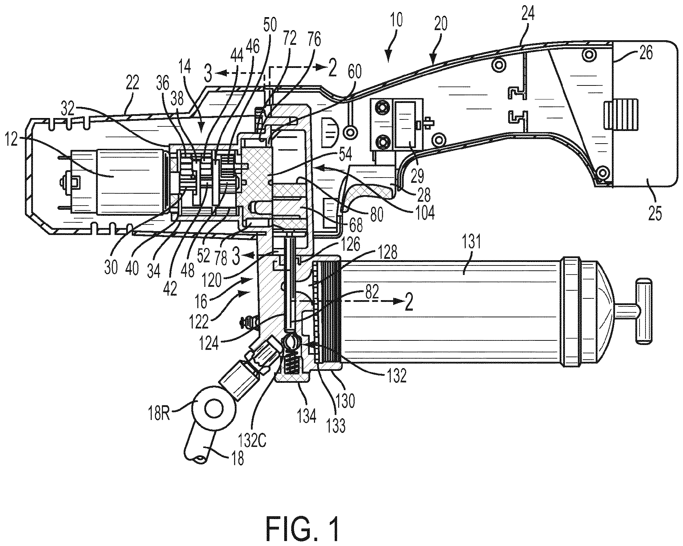

The grease gun 10 of the present invention is shown in FIG. 1. The grease gun 10 basically comprises an electric motor 12 that drives a power transmission 14 that in turn drives a pump mechanism 16 that discharges grease under pressure through a discharge spout 18. These component parts are contained in or mounted on a housing 20.

The housing 20 may be constructed of plastic as is typical in many prior art battery operated grease guns. The housing 20 is preferably constructed of several housing parts that are held together by fasteners (not shown), as also is conventional. The housing 20 may be constructed with a motor 12 and transmission compartment 22 on one side and a manual handle 24 on an opposite side.

The handle 24 is basically hollow and can be dimensioned to accommodate one or more batteries (not shown) in its interior. Alternatively, the bottom edge 26 of the handle can be designed for the attachment of a separate battery pack 25 represented by dashed lines in FIG. 1. A trigger 28 may be mounted on the handle 24 in a position where it can be easily manipulated by the index finger of a hand gripping the handle. The trigger 28 is preferably connected to an electric switch 29 that is selectively operated by manual manipulation of the trigger 28 to provide electric power from the battery pack 25 to the electric motor 12 to operate the motor 12. The selective operation of the electric motor 12 in this manner is well known in the prior art. Persons skilled in the art shall recognize that the positioning of the handle 24, the battery pack 25, the electric motor 12 and power transmission 14 provides a distribution of the weight of the grease gun 10 that enables the grease gun 10 to be more easily manually manipulated while gripping the handle 24.

The electric motor 12 is mounted in the motor and transmission compartment 22 of the housing 20 adjacent the power transmission 14 mounted in the compartment. The motor 12 preferably has an output shaft with a spur gear 30 mounted thereon. The output shaft and spur gear 30 may extend through an end wall 32 of a gear casing 34 of the power transmission 14. The power transmission 14 may be contained in the gear casing 34 is a three stage planetary gearing reduction transmission. It is not necessary that the transmission have three stages of planetary gearing. Any number of planetary gear stages could be made to work depending upon the motor construction.

The output spur gear 30 of the electric motor 12 may also function as a sun gear of a first planetary gear set of the power transmission 14. This spur gear 30 preferably drives three planet gears 36 (only one of which is seen in FIG. 1) of a first carrier 38 of the first planetary gear set. The planet gears 36 preferably mesh with a first orbit gear 40 that is fixed to the gear casing 34 of the power transmission. Rotation of the output spur gear 30 of the electric motor may cause the first carrier 38 to rotate at a reduced speed while increasing the torque of the motor output.

A second sun gear 42 may be fixed to the first carrier 38. This second sun gear 42 drives three planet gears (only one of which is shown in FIG. 1) of a second planetary gear set of the power transmission 14. The second series of planet gears 44 are mounted on a second carrier 46 and also mesh with the fixed orbit gear 40 of the first planetary gear set. This second planetary gear set further reduces the speed of rotation of the electric motor output and further increases its torque.

A third sun gear 48 is preferably fixed to the second planet gear carrier 46. This third sun gear 48 may mesh with three planet gears 50 of a third planetary gear set of the power transmission 14. The third set of planet gears 50 mesh with a second orbit gear 52 that is fixed to the gear casing 34 of the power transmission 14. The third set of planet gears 50 are preferably mounted for rotation on a final driver 54. This third planetary gearing arrangement further reduces the output speed of the electric motor 12 while increasing its torque. The planetary gearing arrangements of the power transmission 14 transform the output of the electric motor 12 reducing its speed while increasing its torque as it is transmitted to the final driver 54 causing rotation of the final driver.

A final driver 54 may have a circular drive surface 56 and a circular driven surface. The final driver has a cylindrical peripheral surface 60 that spaces the drive 56 and driven surfaces. A drive pin 68 with a cylindrical bushing 70 mounted for rotation thereon is preferably screw threaded into the drive surface 56.

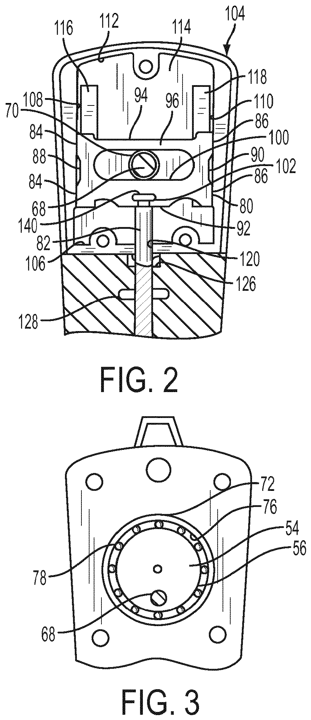

The gear casing 34 of the power transmission 14 has an annular collar 72 and the final driver 54 is mounted for rotation in the annular collar. As shown in FIGS. 1 and 3, the annular collar 72 has a cylindrical interior surface 76 that is radially spaced from the cylindrical peripheral surface 60 of the final driver 54. Positioned between the cylindrical peripheral surface 60 of the final driver 54 and the cylindrical interior surface 76 of the annular collar is a roller bearing assembly 78 that mounts the final driver 54 for rotation in the annular collar 72. On rotation of the output spur gear 30 of the electric motor 12, the rotation is transmitted through the power transmission 14 to the final driver 54 and rotates the final driver in the annular collar 72 at a reduced speed of rotation from that of the motor output spur gear 30 and at an increased torque. The rotation of the final driver 54 is transmitted by the drive pin 68 and drive pin bushing 70 to a yoke 80 and plunger 82 of the pump mechanism 16. The yoke 80 has a generally square configuration with opposite pairs of side sliding surfaces 84, 86 spaced from each other by depressed surfaces 88, 90, respectively, a bottom surface 92 and a top surface 94. An oblong cam slot 100 passes through the yoke 80. The cam slot 100 is dimensioned to receive the drive pin 68 and its bushing 70 therein allowing sufficient room to enable the drive pin 68 and bushing 70 to slide through the cam slot 100 freely from end to end. A transverse T-shaped slot 102 passes through the yoke bottom surface 92 and preferably receives the head 140.

The plunger 82 preferably has a cylindrical shank that is sized to fit into the cylindrical pump chamber 124 so that the exterior surface of the shank engages in sliding engagement with the interior surface of the pump chamber 124. The plunger has a bottom piston surface. Persons skilled in the art will recognize that, with such arrangement, when motor 12 rotates the output shaft, the final driver 54 will rotate as well, causing plunger 82 to reciprocate along its axis.

The pump mechanism 16 preferably includes a pump housing 122 that, in the embodiment shown in the drawings is an integral extension of the annular collar 72 of the gear casing 34. The pump housing 122 preferably contains a cylindrical pump chamber 124 that is dimensioned to receive the plunger 82 in sliding engagement therein. As seen in FIGS. 1 and 2, the pump chamber 124 preferably aligns with the notch 120 in the slide box bottom wall 106. This enables the plunger 82 positioned in the pump chamber 124 to extend upwardly through the notch 120 to its connection with the yoke 80 shown in FIGS. 1 and 2.

A resilient seal 126 is preferably positioned in an annular recess in the pump housing 122 and surrounds the plunger 82. The seal 126 seals the pump chamber 124 from the slide box notch 120. The pump chamber 124 also communicates with a lubricant supply passage 128. The lubricant supply passage 128 communicates with the interior of a cylindrical skirt 130 of the pump housing 122. The cylindrical skirt 130 has internal screw threading that is adapted to receive external screw threading on a cylindrical lubricant reservoir 131 of the type that is typically employed with grease guns.

The lubricant supply reservoir 131 contains either a supply of lubricant drawn therein or a cartridge of lubricant and has a spring biased plunger (not shown) that exerts a pressure on the lubricant contained in the reservoir. The pressure exerted by the plunger provides a continuous supply of lubricant to the supply passage 128. The operation of the cylindrical lubricant reservoir is typical of prior art grease guns that are both manually and battery operated and therefore the reservoir is not shown in the drawing figures.

According to the invention a filter 133 is disposed between lubricant supply reservoir 131 and plunger 82. Filter 133 is be a mesh filter having holes between about 0.2mm and about 1.0mm. Preferably the holes in the filter 133 are about 0.54mm. Filter 133 may be part of lubricant supply reservoir 131 or pump housing 122. With such arrangement, debris particles can be trapped before entering pump chamber 124, extending the life of grease gun 10.

A ball check valve assembly 132 is preferably positioned in the bottom of the pump housing 122 communicating with the pump chamber 124 and is held in place by a screw threaded plug 134. The chamber 124 also communicates with the discharge spout 18 of the grease gun 10. The positioning of the ball check valve 132 and the discharge spout 18 shown in FIG. 1 is common to many prior art grease guns. The reciprocation of the plunger 82 causes its bottom piston surface 138 to be retracted beyond the lubricant supply passage 124 enabling lubricant to enter into the pump chamber 124. On the return stroke of the plunger 82, the lubricant is pushed through the pump chamber 124 and is put under pressure. With increased pressure of the lubricant, the ball valve 132 unseats and enables the lubricant under pressure to pass through the ball valve chamber 132C to the discharge spout 18. This operation is typical in many prior art grease guns.

Preferably a rotational coupling (or rotary union) 18R is provided between pump chamber 124 and discharge spout 18. Such arrangement allows for the discharge spout 18 to be rotated towards a desired angle. Such arrangement also allows for more compact storage as discharge spout 18 can be rotated into a smaller envelope.

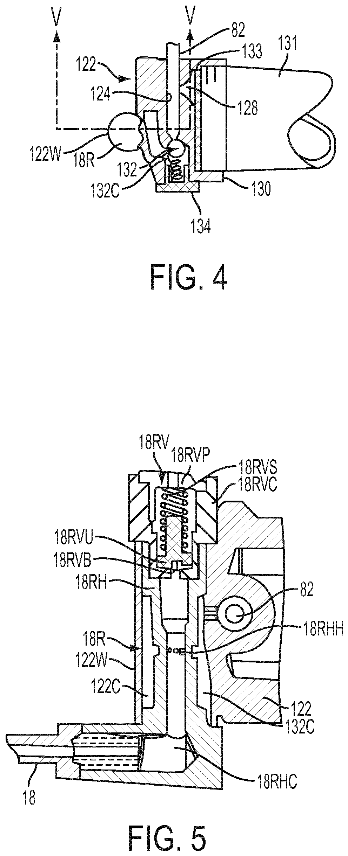

FIGS. 4-5 illustrate an alternate rotational coupling 18R. In this embodiment, it would be desirable to make a portion of rotational coupling 18R to be integral with pump housing 122. Pump housing 122 may have a wall 122W that creates a substantially cylindrical channel 122C.

Rotational coupling 18R may comprise a hose connector 18RH for connecting to hose 18 and entering the channel 122C at one end. Hose connector 18RH may have a chamber 18RHC extending therethough. In addition hose connector 18RH may have a portion with a reduced diameter and/or holes 18RHH extending from the chamber 18RHC to the outer surface of hose connector 18RH, so that the chambers 122C and 18RHC are connected.

At the other end of channel 122C, a pressure relief valve 18RV (and in particular valve coupling 18RVC) may be threadingly engaged to hose connector 18RH. Persons skilled in the art will recognize that the threaded engagement between hose connector 18RH and valve coupling 18RVC will preferably maintain rotational coupling 18R within wall 122W and chamber 122C.

A plug 18RVP may in turn be threadingly engaged to valve coupling 18RVC. Pressure relief valve 18RV may include a valve 18RVV, a spring 18RVS valve 18RVV biasing against valve coupling 18RVC, and a ball plug 18RVB sandwiched between valve 18RVV and valve coupling 18RVC.

With such arrangement, plunger 82 will pump grease into ball valve chamber 132C. Such grease will move into chamber 122C and enter chamber 18RHC. The grease can then exit through hose 18 and/or pressure relief valve 18RV.

Persons skilled in the art will recognize that rotational coupling 18R preferably rotates about an axis that is substantially perpendicular to the axis of plunger 82 (and of pump chamber 124), and substantially coaxial with the axis of chamber 122C.

## Claims

1. A grease gun comprising:
a housing (20);
a lubricant supply reservoir (131) for holding grease;
an electric motor (12) disposed in the housing (20);
a pump mechanism (16) driven by the electric motor (12), the pump mechanism (16) discharging grease from the lubricant supply reservoir (131) through a discharge spout (18), the pump mechanism (16) comprising a plunger (82), and a filter (133) disposed between the lubricant supply reservoir (131) and the plunger (82); **characterized in that** the filter (133) is a mesh filter with holes between about 0.2mm and about 1.0mm.

2. The grease gun of Claim 1, wherein the filter (133) is a mesh filter with holes about 0.54mm.

3. The grease gun of Claim 1, wherein the discharge spout (18) is rotatably attached to the housing (20).

4. The grease gun of any of the previous claims wherein the filter (133) forms part of the lubricant supply reservoir.

5. The grease gun of any of claims 1 to 3 wherein the pump mechanism (16) comprises a pump housing (122), the filter (133) forming part of the pump housing (122).

## Patentansprüche

1. Fettpresse, umfassend:
ein Gehäuse (20);
einen Schmiermittelversorgungsbehälter (131) zum Aufbewahren von Fett;
einen Elektromotor (12), welcher in dem Gehäuse (20) angeordnet ist;
einen Pumpenmechanismus (16), welcher von dem Elektromotor (12) angetrieben wird, wobei der Pumpenmechanismus (16) Fett aus dem Schmiermittelversorgungsbehälter (131) durch eine Ausgusstülle (18) abgibt, wobei der Pumpenmechanismus (16) einen Stössel (82) und einen Filter (133), welcher zwischen dem Schmiermittelversorgungsbehälter (131) und dem Stössel (82) angeordnet ist, umfasst; **dadurch gekennzeichnet, dass** der Filter (133) ein Maschenfilter mit Löchern zwischen etwa 0,2 mm und etwa 1,0 mm ist.

2. Fettpresse nach Anspruch 1, wobei der Filter (133) ein Maschenfilter mit Löchern von etwa 0,54 mm ist.

3. Fettpresse nach Anspruch 1, wobei die Ausgusstülle (18) drehbar an dem Gehäuse (20) befestigt ist.

4. Fettpresse nach einem der vorstehenden Ansprüche, wobei der Filter (133) Teil des Schmiermittelversorgungsbehälters ist.

5. Fettpresse nach einem der Ansprüche 1 bis 3, wobei der Pumpenmechanismus (16) ein Pumpengehäuse (122) umfasst, wobei der Filter (133) Teil des Pumpengehäuses (122) ist.

## Revendications

1. Pistolet graisseur comprenant :
un boîtier (20) ;
un réservoir d'alimentation en lubrifiant (131) destiné à contenir de la graisse ;
un moteur électrique (12) disposé dans le boîtier (20) ;
un mécanisme de pompe (16) entraîné par le moteur électrique (12), le mécanisme de pompe (16) distribuant de la graisse à partir du réservoir d'alimentation en lubrifiant (131) par l'intermédiaire d'un bec distributeur (18), le mécanisme de pompe (16) comprenant un plongeur (82), et un filtre (133) disposé entre le réservoir d'alimentation en lubrifiant (131) et le plongeur (82) ; **caractérisé en ce que** le filtre (133) est un filtre à tamis pourvu de trous entre environ 0,2 mm et environ 0,1 mm.

2. Pistolet graisseur selon la revendication 1, dans lequel le filtre (133) est un filtre à tamis pourvu de trous d'environ 0,54 mm.

3. Pistolet graisseur selon la revendication 1, dans lequel le bec distributeur (18) est fixé par rotation au boîtier (20).

4. Pistolet graisseur selon l'une quelconque des revendications précédentes, dans lequel le filtre (133) fait partie du réservoir d'alimentation en lubrifiant.

5. Pistolet graisseur selon l'une quelconque des revendications 1 à 3, dans lequel le mécanisme de pompe (16) comprend un boîtier de pompe (122), le filtre (133) faisant partie du boîtier de pompe (122).
